# EUROPEAN PATENT SPECIFICATION

(11) **EP 2 879 997 B1**
(45) Date of publication and mention of the grant of the patent: **30.11.2016**
(21) Application number: 14718195.2
(22) Date of filing: 03.03.2014
(51) Int. Cl.: C02F 3/12, C02F 3/10, C02F 3/20, C02F 3/22, C02F 3/30

(54) **BIOLOGICAL REACTOR FOR WASTE WATER PURIFICATION**
BIOLOGISCHER REAKTOR ZUR ABWASSERREINIGUNG
RÉACTEUR BIOLOGIQUE POUR UNE PURIFICATION D'EAUX USÉES

(30) Priority: 04.03.2013 SK 500172013
(43) Date of publication of application: 10.06.2015
(73) Proprietor: Penzes, Ladislav, Bac 930 30 (SK); Csefalvay, Juraj, 900 44 Tomasov (SK)
(72) Inventor: Penzes, Ladislav, Bac 930 30 (SK); Csefalvay, Juraj, 900 44 Tomasov (SK)
(74) Representative: Litvakova, Lenka
(86) International application number: PCT/SK2014/050005
(87) International publication number: WO 2014/137298

(56) References cited:
- WO-A1-82/00135
- US-A- 4 452 700
- US-A- 4 882 046

## Description

### Technical Field

The present invention relates to a biological reactor for wastewater treatment from minor sources of pollution, which utilizes activation process.

### Background of the Invention

Package domestic wastewater treatment plants and small wastewater treatment plants are used for treatment of wastewater contaminated by sewage from sources that cannot be connected to public sewer system.

Package domestic wastewater treatment plants are increasingly used; they are made of plastic using injection, casting or welding of finished blocks, as these are relatively lightweight, waterproof, recyclable and provide long service life.

One of the most widely used systems of wastewater treatment in domestic plant segment is activation process, especially low-loaded activation system with activated sludge in upflow and/or with growth culture on bio-carrier.

Construction of domestic wastewater treatment plant must provide the following primary functions:
- to capture gross, non-degradable impurities, such as plastic, wood, bones, etc.;
- to capture and process gross, degradable impurities, such as food leftovers, toilet paper, etc.;
- to mix and aerate the activation zone where degradation of organic impurities, nitrification or denitrification takes place using activated sludge either in upflow or immobilized on biomass carriers or using combined system;
- to separate activated sludge from clear treated water in separation zone and return the separated activated sludge into treatment process as return sludge;
- to store and stabilize surplus activated sludge produced in the process of waste water treatment until the following disposal of surplus sludge.

These primary functions can be combined best in a biological reactor with optimum shape and dimensions which provide the aforementioned processes as well as meet utility criteria. Biological reactors, in terms of the present state of technology, are divided into at least three functional zones: mechanical pre-treatment zone, activation zone and separation zone. In this classification, biological reactors may consist of one or three tanks where the respective zones are separated by partition walls (WO92/03386). In such case, it is of high significance that circulation, mixing and settling inside the biological reactor runs in all functional zones of the reactor at conditions that are optimal for the processes occurring therein and that circulatory currents follow the wastewater treatment sequence required by the technology while mixing and circulation must be carried out in an energetically efficient manner.

Circulation and mixing are the key to capture, crushing and biological treatment of gross, degradable impurities in the mechanical pre-treatment zone. According to the present state of art (US2003/0183572A1, SK283582, US4882046), the most preferred is mixing by air-lift pump, which drives mixture of air bubbles with activated mixture under a mechanical strainer, where these gross impurities are captured; the hydrodynamic force of the incoming liquid with biologically active mixture of wastewater and activated sludge performs gradual disintegration and biological treatment of worse degradable substances such as fat clusters, paper, etc. Activated mixture, brought into a basket for gross impurities using an air-lift pump, usually leaves through the grate walls of the basket together with incoming wastewater carrying particles ground off the gross impurities directly into the further functional zones of the biological reactor; either the mechanical pre-treatment zone or non-aerated or aerated activation zone. Flow of the mixture out of the basket can be directed by vertical walls, which may lead the activated mixture to the bottom; vertical walls may be clustered in series, directing the flow downwards and upwards. Such internal arrangement of non-aerated activation zone or mechanical pre-treatment zone is effective for better processing of worse degradable organic compounds and higher effectiveness. However, it increases the complexity of the device, makes de-sludging more difficult, device being heavier and more expensive. Mechanical pre-treatment assembly including screen basket, flow regulator, etc. are often permanently fitted with the exception of basket for gross impurities.

Circulation and mixing are also very important in ensuring that devices is odor-free device, especially in the zone of mechanical pre-treatment where undigested, raw organic substances and residues are and where surplus biological sludge is stored. In the present state of art, the odor-free state is most often achieved by good sealing of the non-aerated zone for mechanical pre-treatment and through treatment of the air (WO2009/082237A1) or by ventilation of the zone to the height above the highest floor of the attached building, which are both relatively expensive measures.

Further, circulation and mixing is important for decreasing of floating substances and froth on the water surface in the domestic wastewater treatment plant. Floating substances and froth do not only represent an unaesthetic factor, but as floating substances and froth are not sufficiently enough drawn into the treatment process, they can result in problems with odor, reproduction of small insects and negatively affect effective treatment by leaking into the separation zone. This issue can be solved by using further air-lift pumps which either pump off the froth and floating substances into basket for the mechanical pre-treatment (SK6782002A3, US3709363, US005785854A ), or by continuous pumping from one zone into another over a partition wall ensuring permanent circulation between the zones of the biological reactor through at least one wall, which will clean the water surface from froth and floating substances. Besides the fact that such solution requires another air-lift pump, partitioning of the internal space of biological reactor by walls can represent complications when emptying and filling of such reactor with water or wastewater.

It is widely known that maintaining highly oxic conditions in aerated oxic zone with simultaneous maintaining of deeply anoxic environment in the non-aerated, anoxic activation zone and effective circulation between these zones for alternation of oxic and anoxic conditions is very important for improvement of treatment effectiveness from the view of degradation of ammonium nitrogen (nitrification) or total nitrogen (denitrification). The recirculation of activated mixture between anoxic and oxic zone that ensures nitrogen removal through denitrification process is, in the case of domestic and small wastewater treatment plants, mostly provided by hydro-pneumatic air-lift pumps which are less disruptive to activated sludge flocs than mechanical pumps while being more economical in terms of both investments and operation. Recirculation by air-lift pump requires regulation of air content, either by manual air valve or by electromagnetic valve, which makes the operation more complicated and the device more expensive. Recirculation of activated mixture between different functional activation zones can also be achieved by horizontal rotational flow which can be induced by mechanical stirring device (US4452700) or by pneumatic method (US3879285); however, it always involves mixing of the whole cross-section of the tank.

This invention aims to develop device for treatment of waste water from minor sources of pollution with high cleaning effectiveness and parallel biological removal of nitrogen, elimination of odors, reduced sludge production and minimized investment and operational costs for activated sludge recirculation.

### Nature of the Invention

This problem is solved and drawbacks of the previous devices are largely eliminated by biological reactor for wastewater treatment from minor sources of pollution by activation process utilizing activated sludge in upflow and/or with growth culture on bio-carrier, where all processes of biological treatment with activation system take place in a single-tank biological reactor with spatially separated functional zones of mechanical pre-treatment, anaerobic sludge zone for decreasing sludge production, anoxic non-aerated zone for denitrification, oxic aerated zone for nitrification and separation zone for separation of activated sludge from clear treated water according to this invention, based on the principle of a device with one tank with useful circular ground plan, containing separation chamber with useful circular ground plan. The space between casing of the separation chamber and the casing of the biological reactor tank is divided into two chambers using two vertical partition walls A and B spanning from the bottom of the biological reactor over the surface of water inside the biological reactor tank, namely mechanical pre-treatment chamber with the anaerobic sludge zone in the lower portion of the mechanical pre-treatment chamber and anoxic non-aerated zone in the upper portion of the mechanical pre-treatment chamber, and aerated chamber. Mechanical pre-treatment chamber and aerated chamber are connected by an opening in the upper portion of both vertical partition walls A and B, where aerating elements are located near the bottom of the aerated chamber in front of the vertical partition walls A and B. Recirculation of activated mixture from the oxic aerated chamber into anoxic non-aerated zone of the mechanical pre-treatment chamber is provided by placement of aeration elements in such manner that a height the water column over the aeration element A is lower than height the water column over the aeration element B and/or air flow into aeration elements is regulated by air flow regulator so that higher amount of air flows into the aeration element A than into the aeration element B, which, due to higher amount of air bubbles flowing up along the partition wall A than the partition wall B, causes lower water density near the partition wall A than partition wall B, resulting in flow from the place of higher density to the place of lower density, which causes rotational, horizontal circulation of water surface layer of activated mixture around the upper, cylindrical portion of the casing of the separation chamber.

In the preferred embodiment, the lower edge of openings in partition walls A and B is located at most 15 cm below the water surface, which ensures only circulation of the surface, maximum 15 cm high layer of water with dissolved oxygen and activated sludge in oxic state; besides recirculation of activated mixture between mechanical pre-treatment chamber and aerated chamber, this provides odor-free nature of the mechanical pre-treatment chamber and decreased production of the froth on water surface. Horizontal flow carries smelly gases and organic molecules, which are being mixed with the stream, while the odorants are absorbed in regenerated activated sludge, which binds them by adsorption and absorption and performs their aerobic degradation. Below the horizontally flowing activated mixture, anaerobic-anoxic environment is maintained in mechanical pre-treatment chamber, so anaerobic processes can continuously degrade surplus sludge and nitrogen can be partially reduced by biological process.

In the preferred embodiment, aeration elements A and B are formed by a pipe-type aeration element. At the bottom of the biological reactor, in the aerated chamber there is a pipe-type aeration element with perforation along its whole length, in at least 1° angle with the bottom of the biological reactor, so that the perforated part of the aeration element A is situated higher than the perforated part near the partition wall B.

In the preferred embodiment, mechanically pre-treated wastewater is mixed with recirculated sludge pumped by air-lift pump from the bottom of separation chamber and the flow of such activated mixture is pipe-directed to the bottom of the mechanical pre-treatment with anaerobic conditions providing degradation of primary settleable organic substances and degrading surplus sludge, from where it flows up through a layer of settled sludge towards the surface, where it meets horizontal flow of recirculated activated sludge, creating anoxic conditions for biological nitrogen degradation (denitrification) below the water surface.

Preferably, the tank has circularground plan with downward tapering conical shape, which provides beneficial spatial arrangement for settling and concentrating of primary sludge and surplus sludge at the bottom of the mechanical pre-treatment chamber. If a removable, assembled internal construction is fitted into the empty tank, conical-bottom tanks can be inserted one into another thereby saving space during transport of multiple pieces.

Through solving drawbacks of the present state of art according to this invention, such construction of wastewater treatment biological reactor for minor sources of pollution was developed that provides effective removal of organic pollution from wastewater with parallel biological reduction of nitrogen, odor elimination, reduced sludge production and minimized investment and operational costs of activated sludge recirculation.

### Overview of Figures in Drawings

Principle of the invention is further clarified in examples of its implementation, which are described based on the attached drawings that show:
- Figure 1a, b, c: Biological reactor for wastewater treatment with activated sludge in upflow according to the invention;
- Figure 2a, b: Biological reactor for wastewater treatment with activated sludge in combined system of upflow and bio-carrier according to the invention;
- Figure 3a, b: Biological reactor for wastewater treatment with activated sludge in upflow according to the invention.

### Examples of Embodiments

### Example 1

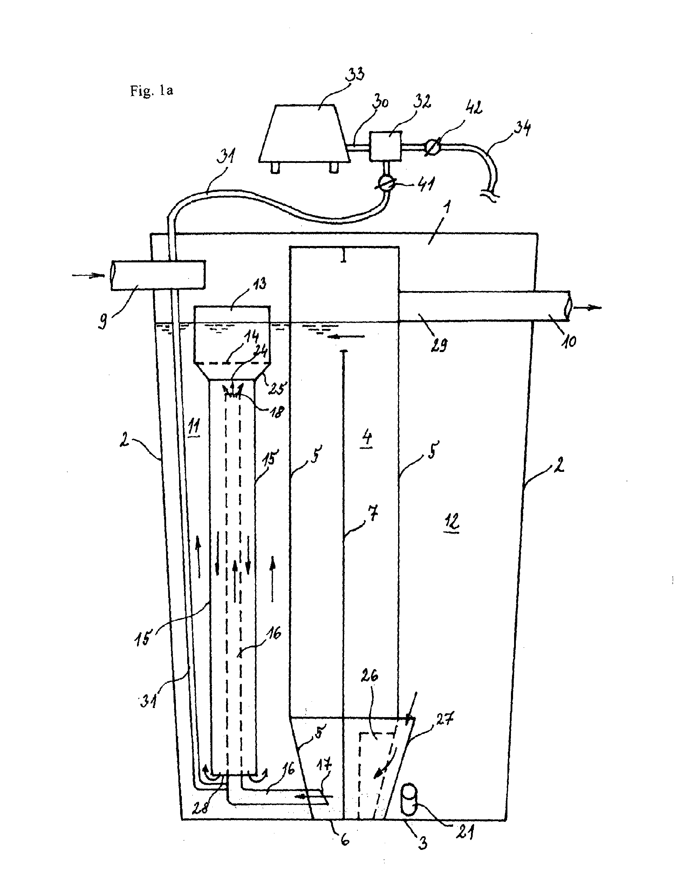

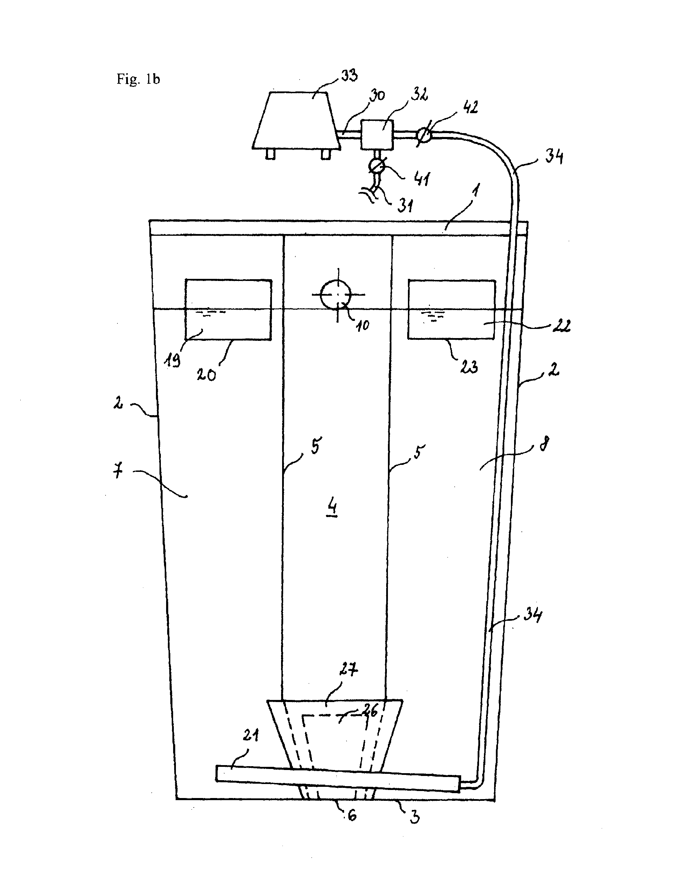

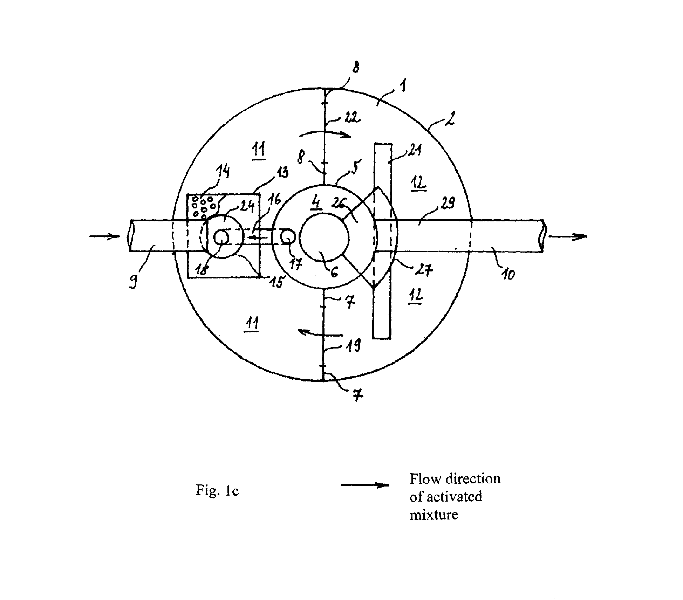

Biological reactor for wastewater treatment from minor sources of pollution using activation process with activated sludge in upflow, according to the invention, Fig. 1a, b, c has a tank 1 with a casing 2 and a bottom 3 with conical, downward tapering shape. The tank 1 has an inflow 9 and an outflow 10. The tank 1 of the biological reactor contains a centrally located separation chamber 4, which is delimited inside the tank 1 by a casing 5 and a bottom 6 of the separation chamber 4, where the casing 5 has cylindrical shape in its upper portion and conical shape, tapering downward in the lower portion, with angle between the conical portion of the casing 5 and the bottom 3 of the tank 1 of the biological reactor being at least 60°. Space between the casing 2 of the biological reactor and the casing 5 of the separation chamber 4 is divided by vertical partition walls A 7 and B 8 into two parts, which, on the inflow side 9, form a mechanical pre-treatment chamber 11 and, on the outflow side 10, form an aerated chamber 12. The mechanical pre-treatment chamber 11 contains a raking basket 13 with a perforated grate 14. Under the perforated grate, there is a funnel-shaped solid bottom 25 of the raking basket 13, which, after the coarse pre-treatment, directs wastewater into a fixed and watertight connected mouth 24 of a vertical intake piping 15 used for directing activated mixture flow, i.e. the mixture of the incoming wastewater after the coarse pre-treatment and activated sludge pumped by air-lift pump 16, towards the bottom of the mechanical pre-treatment chamber 11.

The pipe of the air-lift pump 16 for suctioning of settled sludge from the bottom of the separation chamber 4 is introduced into the intake piping 15. A suctioning mouth 17 of the air-lift pump 16 is located near the bottom of the separation chamber 4. The pipe of the air-lift pump 16 is led axially inside the vertical intake piping 15 of the activated mixture and is ended by a pump opening 18 under the perforated grate 14 of the raking basket 13. The intake piping 15 is ended by an opening 28 located above the bottom of the mechanical pre-treatment chamber 11 so that the activated mixture can freely outflow.

The partition walls A 7 and B 8 are fixed to the casing 5 of the separation chamber 4, the casing 2 and the bottom 3 of the biological reactor tank 1 and they span from the bottom 3 of the biological reactor tank 1 to water surface inside the biological reactor, i.e. over the bottom of an discharge piping 29. Both partition walls A 7 and B 8 have window-shaped openings 19, 22 with lower edges 20, 23 of the openings 19, 22 located below the lower end of the discharge piping 29 in 5 cm depth.

At the bottom of the aerated chamber 12, there is an aeration element 21. The aeration element 21 of the pipe-shaped type is perforated along its whole length to provide fine-bubble aeration. The pipe aeration element 21 is attached to the bottom of the aerated chamber 12 in inclined position so that its part on the side of the partition wall A 7 is positioned higher than on the side of the partition wall B 8, so that aeration on side of wall A 7 is more intense than on side of partition wall B 8. Over the part of the aeration element 21 near the wall A 7, the water column is lower than near the wall B 8; at lower water pressure of the water column near the wall A 7, more air bubbles escape than near the wall B 8; the bubbles in water reduce water density more near the wall A 7 than near the wall B 8, while the water tends to flow from the place of higher density to the place of lower density, therefore the water moves from the aerated chamber 12 through the opening 19 into the mechanical pre-treatment chamber 11 and then through the opening 22 into the aerated chamber 12, which completes the circulation. It produces circulation of water around the cylindrical portion of the casing 5 of the separation chamber 4, which is limited to the upper layer of water determined by the depth of the lower edges 20, 23 of the openings 19, 22 and also determines direction of the flow through the openings 22 and 19 in the biological reactor.

The lower, conical portion of the casing 5 of the separation chamber 4 contains an opening 26, through which the activated mixture flows from the aerated chamber 12 to the separation chamber 4. In front of the opening 26, there is a deflector 27 directing the flow of the aerated activated mixture caused by the aeration element 21.

The air-lift pump 16 creates a circulation circuit starting at the bottom of the sedimentation chamber 4 at the mouth 17 of the air-lift pump 16 directing the flow upward through the pipe of the air-lift pump 16 through its mouth 18, where wastewater pre-treated by perforated grate 14 is mixed with pumped activated sludge. At the same time, the hydrodynamic force of the pumped liquid crushes gross impurities and activated sludge provides biological digestion of gross impurities. The activated mixture flows out through the funnel-shaped lower part 25 of the raking basket 13 through the mouth 24 to the intake piping 15, which directs the flow of the activated mixture downward to the bottom of the mechanical pre-treatment chamber 11. The activated mixture freely flows out through the outlet 28 of the intake piping 15, then flows upwards through a layer of settled primary sludge and surplus sludge; the hydrodynamic force of the stream produced by the action of the air-lift pump 16 mixes the content of the mechanical pre-treatment chamber 11 thus providing optimum environment for anaerobic fermentation of organic substances which are coarse and hard to degrade and of surplus sludge in deeply anaerobic-anoxic environment with typical redox potential of -150 to -250 mV. The upflowing current of the activated mixture with low redox potential -150 to -250 mV meets the recirculated oxic activated mixture with high redox potential +50 to +150 mV, which produces the anoxic activated mixture with redox potential of -50 to +50 mV, positively affecting reduction of nitrates, or biological reduction of nitrogen. The activated mixture then continues through the opening 22 in the partition wall 8 because horizontal, rotational movement of the activated mixture on the surface diverts flow in this direction. The activated mixture flows into aerated chamber 12, where degradation of organic substances and nitrification of ammonia nitrogen take place in aerobic conditions at redox potential of +50 to +150 mV. The activated mixture flows from the aerated chamber 12 through the opening 26 in the lower, conical part of the separation chamber's 4 casing 5 into the separation chamber 4. In the separation chamber 4, the activated sludge is separated from clear treated water by sedimentation. Clear treated water flows up in the cylindrical part of the separation chamber 4 up to the discharge piping 29, activated sludge flocs settle to the bottom of the separation chamber 4, where the suctioning mouth 17 of the air-lift pump 16 is located. The pressurized air used for aeration of the content inside the aerated chamber 12 and for driving the air-lift pump 16 is supplied by an air blower 33 via air pipings 30, 31, 34. A main air supply 30 from the blower 33 leads toan air manifold 32, which enables regulation of the amount of air flowing into the air-lift pump 16 and into the aeration element 21, through the air pipings 31, 34 using manual air flow regulators 41, 42.

Degradation processes in the mechanical pre-treatment chamber 11 produce odor-free gases (carbon dioxide and methane from degradation of organic mass and surplus sludge, nitrogen from denitrification) as well as malodorous gaseous substances including organic compounds of sulfur and nitrogen. These malodorous gases are largely absorbed by the regenerated activated sludge in the top layer of water inside the biological reactor, where the activated mixture recirculates at high oxic conditions of +50 to +150 mV.

### Example 2

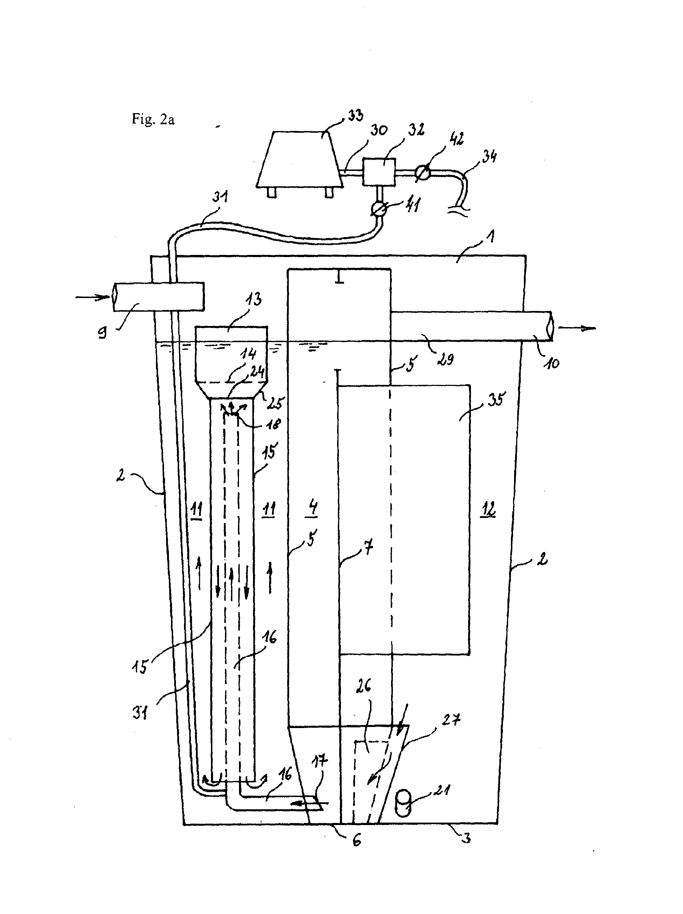

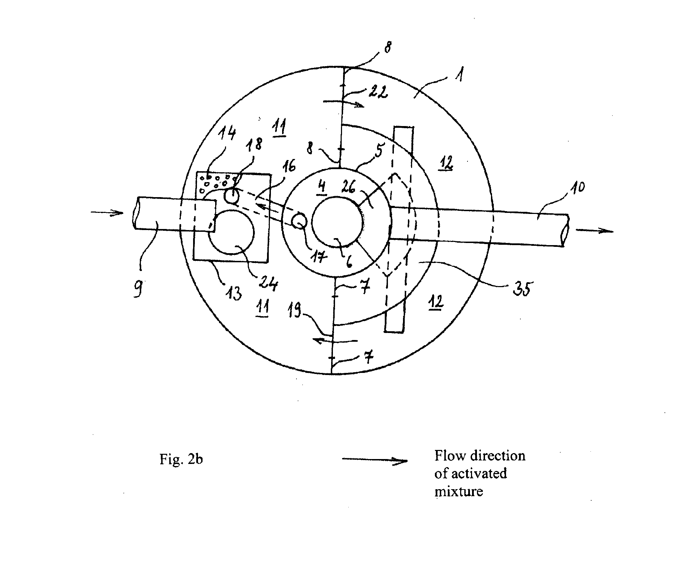

Biological reactor for wastewater treatment from minor sources of pollution using activation process with combined system in upflow and bio-carrier, according to the invention, Fig. 2a, b has the tank 1 with the casing 2 and the bottom 3 with conical, downward tapering shape. The tank 1 has the inflow 9 and the outflow 10. The tank 1 of the biological reactor contains centrally located separation chamber 4, which is delimited inside the tank 1 by the casing 5 and the bottom 6 of the separation chamber 4, where the casing 5 has cylindrical shape in its upper portion and conical shape, tapering downward in the lower portion, with angle between the conical portion of the casing 5 and the bottom 3 of the tank 1 of the biological reactor being at least 60°. The space between the casing 2 of the biological reactor and the casing 5 of the separation chamber 4 is divided by the vertical partition walls A 7 and B 8 into two parts, which, on the inflow side 9, form mechanical pre-treatment chamber 11 and, on the outflow side 10, form aerated chamber 12. The mechanical pre-treatment chamber 11 contains the raking basket 13 with perforated grate 14. Under the perforated grate, there is the funnel-shaped solid bottom 25 of the raking basket 13, which, after coarse pre-treatment, directs wastewater into the fixed and watertight connected mouth 24 of the vertical intake piping 15 used for directing the flow of the activated mixture, i.e. the mixture of the incoming wastewater after the coarse pre-treatment and the activated sludge pumped by the air-lift pump 16, towards the bottom of the mechanical pre-treatment chamber 11.

The piping of the air-lift pump 16 used for suctioning the settled sludge from the bottom of the separation chamber 4 is led perpendicularly into the raking basket 13 through the funnel-shaped bottom 25 of the raking basket 13 so that the mouth 18 of the air-lift pump 16 is located just below the perforated grate 14 next to the mouth 24 of the activated mixture intake piping 15.

At the bottom of the aerated chamber 12, there is the aeration element 21. The aeration element 21 of the pipe-shaped type is perforated along its whole length to provide the fine-bubble aeration. The pipe aeration element 21 is attached to the bottom of the aerated chamber 12 in the inclined position so that its end on the side of the partition wall A 7 is positioned higher than the end on the side of the partition wall B 8 so that aeration on side A 7 is more intense than on side B 8. Over the part of the aeration element 21 near the partition wall A 7, the water column is lower than near the partition wall B 8; at lower water pressure near the partition wall A 7, more air bubbles escape than near the partition wall B 8; the bubbles in the water reduce water density more near the partition wall A 7 than near the partition wall B 8 while the water tends to flow from the place of higher density to the place of lower density, therefore the water moves from the aerated chamber 12 through the opening 19 into the mechanical pre-treatment chamber 11 and then through the opening 22 into the aerated chamber 12, which completes the circulation. It produces circulation of water around the cylindrical part of the casing 5 of the separation chamber 4, which is limited to the upper layer of water determined by the depth of the lower edges 20, 23 of the openings 19, 22 and also determines the direction of the flow through the openings 22 and 19 in the biological reactor.

The aerated chamber 12 holds a bio-carrier 35 which serves as the carrier of the growth microbial cultures of the activation sludge. The bio-carrier 35 is made of plates of 3-dimensional filtration material. The bio-carrier 35 is fitted onto the casing 5 of the separation chamber 4. The role of the bio-carrier 35 is to provide amount of active biomass sufficient to both, the reduction of organic pollution and increasing the effectiveness of the nitrogen reduction by nitrification and denitrification processes.

### Example 3

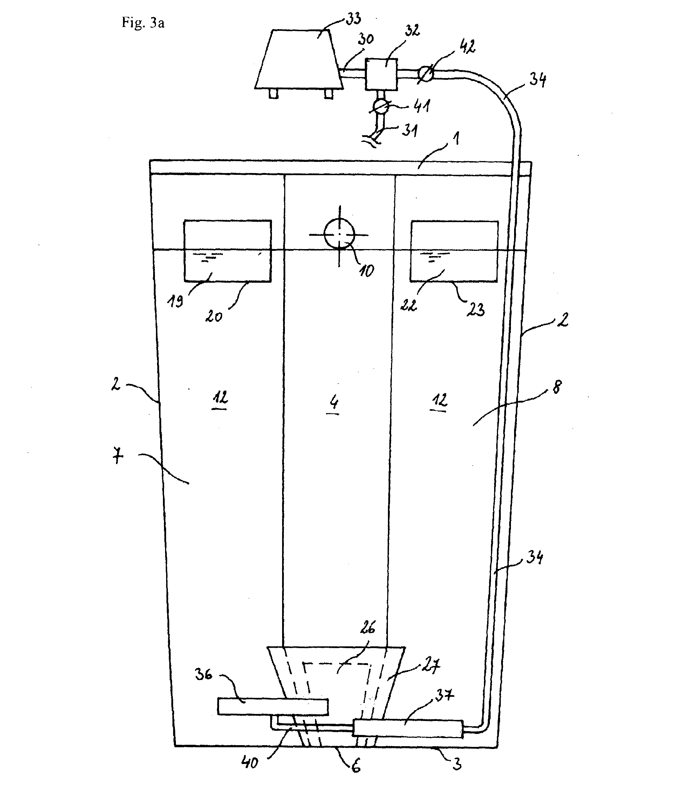

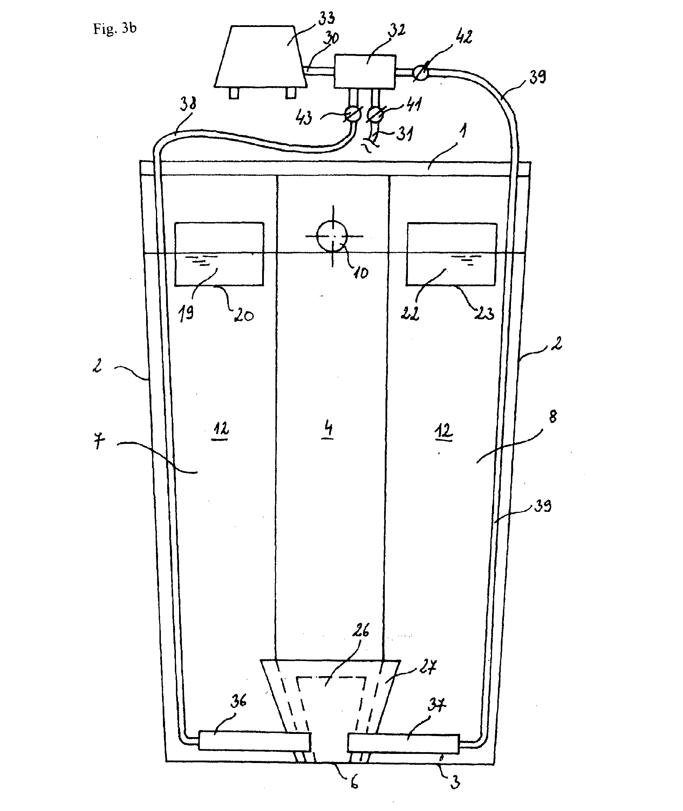

The biological reactor for wastewater treatment from minor sources of pollution using activation process with the sludge in upflow, according to the invention, Fig. 3a, b has the tank 1 with the casing 2 and the bottom 3 with the conical, downward tapering shape. The tank 1 has the inflow 9 and the outflow 10. The tank 1 of the biological reactor contains centrally located separation chamber 4, which is delimited inside the tank 1 by the casing 5 and the bottom 6 of the separation chamber 4, where the casing 5 has the cylindrical shape in its upper portion and conical shape, tapering downward in the lower portion, with angle between the conical portion of the casing 5 and the bottom 3 of the tank 1 of the biological reactor being at least 60°. The space between the casing 2 of the biological reactor and the casing 5 of the separation chamber 4 is divided by the vertical partition walls A 7 and B 8 into two parts, which, on the inflow side 9, form the mechanical pre-treatment chamber 11 and, on the outflow side 10, form the aerated chamber 12. The mechanical pre-treatment chamber 11 contains the raking basket 13 with the perforated grate 14. Under the perforated grate, there is the funnel-shaped solid bottom 25 of the raking basket 13, which, after the coarse pre-treatment, directs wastewater into the fixed and watertight connected mouth 24 of the vertical intake piping 15 used for directing activated mixture flow, i.e. the mixture of the incoming wastewater after the coarse pre-treatment and activated sludge pumped by the air-lift pump 16, towards the bottom of the mechanical pre-treatment chamber 11.

The piping of the air-lift pump 16 used for suctioning the settled sludge from the bottom of the separation chamber 4 is led perpendicularly into the raking basket 13 through the funnel-shaped bottom 25 of the raking basket 13 so that the mouth 18 of the air-lift pump 16 is located just below the perforated grate 14 next to the mouth 24 of the activated mixture intake piping 15.

At the bottom of the aerated chamber 12, there are aeration elements A 36 and B 37 as shown in Fig. 2a. The aeration elements A 36 and B 37 are of the pipe-shaped or plate-shaped type. The aeration elements A 36 and B 37 are mutually interconnected by a connecting-up air piping 40, attached to the bottom of the aerated chamber 12 so that the aeration element A 36 near the wall A 7 is positioned higher than the aeration element B 37 on the side of the partition wall B 8 in order to achieve more intense aeration on the side of the partition wall A 7 than on the side of the partition wall B 8. Above the aeration element A 36 near the wall A 7, the water column is lower than above the aeration element B 37 near the partition wall B 8; at lower pressure of water column near the wall A 7, larger amount of air in the form of air bubbles escape than near the wall B 8; the bubbles in the water reduce water density more near the partition wall A 7 than near the partition wall B 8, while the water tends to flow from the place of higher density to the place of lower density, therefore the water moves from the aerated chamber 12 through the opening 19 into the mechanical pre-treatment chamber 11 and then through the opening 22 into the aerated chamber 12, which completes the circulation.

At the bottom of the aerated chamber 12, there are aeration elements A 36 and B 37 as shown in Fig. 2b. The aeration elements A 36 and B 37 are of the pipe-shaped or plate-shaped type. The aeration elements A 36 and B 37 are attached to the bottom of the aerated chamber 12 at the same height. Each of the aeration elements A 36 and B 37 has its own supply of pressurized air 38, 39, which are connected to the air manifold 32 with the air flow regulators 42, 43. The air flow regulator 43 for the aeration element A 36 is set in the way that the conveyed amount of the air is higher than that of the air flow regulator 42 into the aeration element B 37; near the partition wall A 7, more air bubbles escape than near the partition wall B 8; the bubbles in the water reduce the water density more near the partition wall A 7 than near the partition wall B 8 while the water tends to flow from the place of higher density to the place of lower density, therefore the water moves from the aerated chamber 12 through the opening 19 into the mechanical pre-treatment chamber 11 and then through the opening 22 into the aerated chamber 12, which completes the circulation.

### The Industrial Applicability

The biological reactor according to the present invention can be used for treatment of wastewater from various minor sources, especially family houses and other objects for living, services and recreation.

## Claims

1. A biological reactor for wastewater treatment from minor sources of pollution using activation process with activated sludge in upflow and/or with growth culture on a bio-carrier (35), where all processes of biological treatment with activation process take place in single-tank biological reactor, where functional areas of mechanical pre-treatment, aeration and activated sludge separation are spatially separated, containing a tank (1) with an inflow (9) and an outflow (10), in which a separation chamber (4) with a bottom (6) is situated, an area between a casing (5) of the separation chamber (4) and a casing (2) of the tank (1) is divided by vertical partition walls and near the bottom of the aeration area aeration elements are situated in front of the vertical partition walls **characterized in that** the area between the casing (5) of the separation chamber (4) and the casing (2) of the tank (1) is divided into two parts by two vertical partition walls A (7) and B (8) spanning from a tank bottom (3) up to over a bottom of a discharge piping (29), namely to an aerated chamber (12) and a mechanical pre-treatment chamber (11) having an anaerobic sludge zone in the lower portion, an anoxic non-aerated zone in the upper portion, the mechanical pre-treatment chamber (11) containing a raking basket (13) with a perforated grate (14) and with a funnel-shaped bottom (25) arranged under the perforated grate (14), and a vertical intake piping (15) having a mouth (24) and ending with an outlet opening (28), the mouth (24) being watertight connected with the funnel shaped bottom (25) and the outlet opening (28) being located above the bottom of the mechanical pre-treatment chamber (11); the biological reactor also comprises an air-lift pump (16), which has a suctioning mouth (17) located near the bottom (6) of the separation chamber (4), for suction of the settled sludge from the bottom (6) of the separation chamber (4), and a pipe introduced into the intake piping (15), the pipe of the air-lift pump (16) ending by a pump opening (18) under the perforated grate (14) of the raking basket (13), so that the incoming wastewater, which is, after the coarse pre-treatment, directed by the funnel shaped bottom (25) into the mouth (24) of the intake piping (15), is mixed with the activated sludge pumped by the air-lift pump (16), and the mixture of incoming wastewater and activated sludge is directed by the intake piping (15) towards the bottom of the mechanical pre-treatment chamber (11); the mechanical pre-treatment chamber (11) and the aerated chamber (12) are connected by an opening (19, 22) in the upper parts of both vertical partition walls A (7) and B (8); and wherein recirculation of activated mixture from the oxic aerated chamber (12) into mechanical pre-treatment chamber (11) is provided in such manner that the aeration elements A (36) and B (37) located near the bottom of the aerated chamber (12) in front of the partition walls A (7) and B (8) are situated so that a height of the water column over the aeration element A (36) is lower than a height of the water column over the aeration element B (37) and/or an air flow regulator (42, 43) for the aeration elements A (36) and B (37) provides air flow regulation in such manner that the amount of the air conveyed into the aeration element A (36) is higher than the amount of the air conveyed into the aeration element B (37), which allows to create rotational, horizontal circulation of water surface layer of activated mixture around the upper part of the casing (5) of the separation chamber (4), namely from the opening (19) in the partition wall A (7) through the mechanical pre-treatment chamber (11) to the opening (22) in the partition wall B (8) and through the opening (22) in the partition wall B (8) to the aerated chamber (22) and further to the opening (19) in the partition wall A (7); and wherein an opening (26) is provided in the lower conical portion of the casing (5) of the separation chamber (4) through which the activated sludge can flow from the aerated chamber (12) to the separation chamber (4); and wherein a discharging piping (29) is provided so that the clear treated water separated by sedimentation from the activated sludge in the separation chamber (4) and having flown up in the cylindrical part of the separation chamber (4) up to the discharging pipe (29) can be discharged.

2. The biological reactor for wastewater treatment according to claim 1 **characterized in that** the aeration elements A (36) and B (37) are formed by a pipe-shaped aeration element (21) with perforation along its whole length and the pipe-shaped aeration element (21) is situated at the bottom of the aerated chamber (12), wherein it forms with the tank bottom (3) an angle of at least 1 degree in such manner that the perforated part of the aeration element (21) near the partition wall A (7) is positioned higher than the perforated part near the partition wall B (8).

3. The biological reactor for wastewater treatment according to any of claims 1 and 2 **characterized in that** the lower edge (20, 23) of the openings (19, 22) in the partition walls A (7) and B (8) is located at most 15 cm below the bottom of the discharge piping (29).

4. The biological reactor for wastewater treatment according to any of claims 1 to 3 **characterized in that** the tank (1) has circular ground plan and the casing (2) of the tank (1) has conical shape tapering downward, wherein the separation chamber (4) has circular ground plan with an upper cylindrical part and an lower conically tapering part and is centrally placed in the tank (1).

## Patentansprüche

1. Biologischer Reaktor zur Abwasserbehandlung aus kleineren Verschmutzungsquellen unter Verwendung von Aktivierungsprozess mit einem Belebtschlamm im Auftrieb und/oder mit einer Wuchskultur auf einem Bioträger (35), wobei alle Prozesse der biologischen Behandlung mit einem Aktivierungsprozess in einem biologischen Ein-Becken-Reaktor erfolgen, in dem die Funktionsbereiche der mechanischen Vorbehandlung, des Belüftungsbereichs und der Belebtschlammtrennung räumlich getrennt sind, enthaltend ein Becken (1) mit einem Zufluss (9) und einem Abfluss (10), in dem sich eine Trennkammer (4) mit einem Boden (6) befindet, der Raum zwischen dem Mantel (5) der Trennkammer (4) und dem Mantel (2) des Beckens (1) durch vertikale Trennwände getrennt wird und die Belüftungselemente in der Nähe des Bodens des Belüftungsbereichs vor den vertikalen Trennwänden angeordnet sind, **dadurch gekennzeichnet, dass** der Raum zwischen dem Mantel (5) der Trennkammer (4) und dem Mantel (2) des Beckens (1) durch zwei senkrechte, von dem Boden (3) des Beckens (1) bis zum Boden der Abflussleitung (29) sich erstreckende, Trennwände A (7) und B (8) in zwei Teilen geteilt ist, und zwar in eine belüftete Kammer (12) und in eine Kammer (11) der mechanischen Vorbehandlung mit einer anaeroben Schlammzone im unteren Bereich, einer anoxischen nichtbelüfteten Zone im oberen Bereich, die Kammer (11) der mechanischen Vorbehandlung enthält einen Rechengutkorb (13) mit einem perforierten Rost (14) und mit einem trichterförmigen, unter dem perforierten Rost (14) angeordneten, Boden (25) und eine Zuflussleitung (15) mit einer Mündung (24) und endend mit einer Abflussöffnung (28), die Mündung (24) ist mit dem trichterförmigen Boden (25) wasserdicht verbunden, und die Abflussöffnung (28) über dem Boden der Kammer (11) der mechanischen Vorbehandlung angeordnet ist; der biologische Reaktor beinhaltet auch eine Mammutpumpe (16), deren ihre Saugmündung (17) in der Nähe des Boden (6) der Trennkammer (4) zwecks Ansaugens vom abgesetzten Schlamm von dem Boden (6) der Trennkammer (4) angeordnet ist, und eine in die Zuflussleitung (15) eingeführte Leitung, die Leitung der Mammutpumpe (16) endend mit einer Pumpenöffnung (18) unter dem perforierten Rost (14) des Rechengutkorb (13), so dass das zugeführte Abwasser, das nach dem Grobvorbehandlung durch den trichterförmigen Boden (25) in die Mündung (24) der Zuflussleitung (15) gelenkt wird, mit dem durch die Mammutpumpe (16) gepumpten Belebtschlamm vermischt wird, und die Mischung aus zugeführtem Abwasser und dem Belebtschlamm durch die Zuflussleitung (15) in die Richtung des Bodens der Kammer (11) der mechanischen Vorbehandlung gelenkt wird; die Kammer (11) der mechanischen Vorbehandlung und die belüftete Kammer (12) durch eine Öffnung (19, 22) in den oberen Bereichen der beiden vertikalen Trennwänden A (7) und B (8) verbunden sind; und wobei die Rückführung der Belebtschlammgemisch aus der oxischen belüfteten Kammer (12) in die Kammer (11) der mechanischen Vorbehandlung solcherweise gesichert wird, dass die in der Nähe des Bodens der belüfteten Kammer (12) vor den vertikalen Trennwänden A (7) und B (8) angeordneten Belüftungselemente A (36) und B (37) so positioniert sind, dass eine Höhe der Wassersäule über dem Belüftungselement A (36) niedriger ist, als eine Höhe der Wassersäule über dem Belüftungselement B (37), und/oder dass ein Luftströmungsregler (42, 43) für die Belüftungselemente A (36) und B (37) die Luftstromregelung solcherweise sichert, dass die in das Belüftungselement A (36) zugeführte Luftmenge höher ist, als die in das Belüftungselement B (37) zugeführte Luftmenge, was ermöglicht, eine um den oberen Bereich des Mantels (5) der Trennkammer (4) rotierende, horizontale Zirkulation der Wasseroberflächenschicht des Belebtschlammgemisches zu erzeugen, und zwar von der Öffnung (19) in der Trennwand A (7) durch die Kammer (11) der mechanischen Vorbehandlung zu der Öffnung (22) in der Trennwand B (8) und durch die Öffnung (22) in der Trennwand B (8) in die belüftete Kammer (12) und weiter zu der Öffnung (19) in der Trennwand A (7); und wobei eine Öffnung (26) in dem unteren konischen Bereich des Mantels (5) der Trennkammer (4) vorgesehen ist, durch die der Belebtschlamm von der belüfteten Kammer (12) zu der Trennkammer (4) strömen kann; und wobei eine Abflussleitung (29) so vorgesehen ist, dass das gereinigte Wasser, das durch Sedimentation vom Belebtschlamm in der Trennkammer (4) getrennt wurde und in dem zylindrischen Bereich der Trennkammer (4) bis zur Abflussleitung (29) steigt, abgeleitet werden kann.

2. Biologischer Reaktor zur Abwasserbehandlung nach Anspruch 1, **dadurch gekennzeichnet, dass** die Belüftungselemente A (36) und B (37) durch ein rohrförmiges Belüftungselement (21) mit einer Perforation entlang seiner gesamten Länge gebildet sind und das rohrförmige Belüftungselement (21) sich am Boden der belüfteten Kammer (12) befindet, wobei es mit dem Boden (3) des Beckens (1) einen Winkel von mindestens 1 Grad so einschließt, dass der perforierte Bereich des Belüftungselements (21) bei der Trennwand A (7) höher liegt, als der perforierte Bereich bei der Trennwand B (8).

3. Biologischer Reaktor zur Abwasserbehandlung nach einem der Ansprüche 1 und 2, **dadurch gekennzeichnet, dass** der untere Rand (20, 23) der Öffnungen (19, 22) in den Trennwänden A (7) und B (8) höchstens 15 cm unterhalb der Unterseite der Abflussleitung (29) angeordnet ist.

4. Biologischer Reaktor zur Abwasserbehandlung nach einem der Ansprüche 1 bis 3, **dadurch gekennzeichnet, dass** das Becken (1) einen kreisförmigen Grundriss aufweist und der Mantel (2) des Beckens (1) eine nach unten verjüngende konische Form aufweist, wobei die Trennkammer (4) einen kreisförmigen Grundriss mit einem oberen zylindrischen Abschnitt und einem unteren konisch verjüngenden Abschnitt aufweist und in dem Becken (1) zentral platziert wird.

## Revendications

1. Le réacteur biologique pour l'épuration d'eaux usées provenant des sources mineures de pollution en utilisant le procès d'activation avec la boue activée au déplacement ascensionnel et/ou ensemble avec la culture croissante sur un bio-support (35) où tous processus de l'épuration biologique en utilisant le procès d'activation se déroulent au réacteur biologique à un tank où les espaces fonctionnelles de la préépuration mécanique, de l'aération, et de la séparation de la boue activée sont séparés par rapport à l'espace, contenant un réservoir (1) avec l'arrivée (9) et l'écoulement (10) dans lequel se trouve une chambre (4) de séparation avec le fond (6), l'espace entre la chemise (5) de la chambre (4) de séparation et la chemise (2) du réservoir (1) est divisé par des refends verticaux et chez le fond de la zone d'aération il y a des éléments d'aération situés devant le refends **caractérisé en ce que** l'espace entre la chemise de la chambre (4) de séparation et la chemise (2) du réservoir est divisée en deux parties par deux refendsA (7) et B (8) verticaux étendant du fond (3) du réservoir (1) jusqu'au-dessus du fond de la conduite (29) d'écoulement et cela, en la chambre (12) d'aération et la chambre (11) de préépuration mécanique ayant une zone d'anaérobie de la boue dans la partie inférieure, une zone d'anoxie dans la partie supérieure; la chambre (11) de préépuration mécanique contient a panier (13) pour les râtelures avec une grille (14) perforée et un fond (25) en entonnoir située sous la grille (14) perforée, et la conduite (15) d'amenée ayant sa bouche (24) et l'orifice (28) de décharge à la fin, la bouche (24) étant connectée de manière étanche avec le fond (25) en entonnoir et l'orifice (28) de décharge étant située au-dessus du fond de la chambre (11) de préépuration mécanique; le réacteur biologique comprend aussi une pompe (16) mammouth ayant sa bouche (17) aspirante située près du fond (6) de la chambre (4) de séparation, pour l'aspiration de la boue sédimentée au fond (6) de la chambre (4) de séparation, et la conduite installée dans la conduite (15) d'amenée, la conduite de la pompe (16) mammouth avec l'orifice (18) de la pompe à la fin sous la grille (14) perforée du panier (13) pour les râtelures donc les eaux usées arrivant sont dirigés par le fond (25) entonnoir vers la bouche (24) de la conduite (15) d'amenée après la préépuration grosse et mixtes avec la boue activée pompée par la pompe (16) mammouth, et le mélange composé des eaux usées arrivant avec la boue activée est dirigé via conduite (15) d'amenée vers le fond de la chambre (11) de préépuration mécanique; la chambre (11) de préépuration mécanique et la chambre (12) d'aération sont connectées par une orifice (19, 22) dans les zones supérieures de deux refends A (7) et B (8) verticaux; et la recirculation du mélange d'activation de la chambre (12) d'aération oxic à la chambre (11) de préépuration est effectuée de la manière que les éléments A (36) et B (37) d'aération situés près du fond de la chambre (12) d'aération devant le refends A (7) et B (8) verticaux sont placés de façon que la hauteur de la colonne d'eau au-dessus de l'élément A (36) est inférieure de la hauteur de la colonne d'eau au-dessus de l'élément B (37) et/ou le régulateur (42, 43) de débit de l'air vers les éléments A (36) et B (37) d'aération assure le réglage de débit de l'air de façon que la quantité de l'air courant vers l'élément A (36) d'aération est supérieure de la quantité de l'air courant vers l'élément B (37) d'aération ce qui permet à créer une circulation rotative horizontale de la surface de l'eau pour le mélange d'activation autour de la partie supérieure de la chemise (5) de la chambre (4) de séparation, et cela de l'orifice (19) du refend A (7) à travers la chambre (11) de préépuration mécaniquejusqu'à l'orifice (22) dans le refend B (8) et à travers l'orifice (22) du refend B (8) à la chambre (22) d'aération pour continuer à l'orifice (19) dans le refend A (7); et où une orifice (26) se trouve dans la partie inférieure conique de la chemise (5) de la chambre (4) de séparation dont à travers peut courir la boue activée de la chambre (12) d'aération à la chambre (4) de séparation ; et il y a la conduite (29) d'écoulement et donc l'eau épurée, et séparée via sédimentation de la boue activée dans la chambre (4) de séparation montant dans la partie cylindrique de la chambre (4) de séparation jusqu'à la conduite (29) d'écoulement peut être vidée.

2. Le réacteur biologique pour l'épuration d'eaux usées selon la revendication 1 **caractérisé en ce que** les éléments A (36) et B (37) d'aération sont composés d'un élément (21) d'aération tubulaire perforé sur toute sa longueur et ledit élément (21) d'aération tubulaire se trouvant au fond de la chambre (12) d'aération est situé dans un angle de 1° au moins avec le fond (3) du réservoir (1) de façon que la partie perforée de l'élément (21) d'aération près du refend A (7) est posé supérieur par rapport de la partie perforée près du refend B (8).

3. Le réacteur biologique pour l'épuration d'eaux usées selon les revendications 1 et 2 **caractérisé en ce que** le bord (20, 23) inférieur des orifices (19, 22) dans les refends A (7) et B (8) est situé 15 cm au maximum sous le fond de la conduite (29) d'écoulement.

4. Le réacteur biologique pour l'épuration d'eaux usées selon les revendications 1 à 3 **caractérisé en ce que** le réservoir (1) a la projection horizontale circulaire et la chemise (2) du réservoir (1) a la forme conique se resserrant en bas où la chambre (4) de séparation a la projection horizontale circulaire dont la partie supérieure est cylindrique et la partie inférieure se resserre en bas et étant centralisée dans le réservoir (1).
